# EUROPEAN PATENT APPLICATION

(11) **EP 1 161 010 A1**
(43) Date of publication of application: **05.12.2001**
(21) Application number: 01900768.1
(22) Date of filing: 15.01.2001
(51) Int. Cl.: H04B 17/00, H04B 7/26

(54) **SIR MEASURING DEVICE AND SIR MEASURING METHOD**

(30) Priority: 14.01.2000 JP 2000006764
(71) Applicant: MATSUSHITA ELECTRIC INDUSTRIAL CO., LTD., Kadoma-shi, Osaka 571-8501 (JP)
(72) Inventor: MIYOSHI, Kenichi, Yokohama-shi, Kanagawa 232-0066 (JP); HIRAMATSU, Katsuhiko, Yokosuka-shi, Kanagawa 238-0031 (JP)
(74) Representative: Grünecker, Kinkeldey, Stockmair & Schwanhäusser Anwaltssozietät
(86) International application number: JP0100203
(87) International publication number: WO0152456

(57) **Abstract**

A desired wave power detection section 10 detects desired wave power from a received signal. On the other hand, an interference wave power detection section 11 detects interference wave power from the received signal. Interference wave power before and after in time receives averaging processing over a long interval in an averaging section 12, and receives averaging processing over a short interval in an averaging section 13. A differencing device 124 obtains a difference between an averaged value over the long interval and an averaged value over the short interval. A selection section 16 selects the averaged value of the short interval in the case where the obtained difference is larger than a prescribed threshold value, and selects the averaged value of the long interval in the case where the obtained difference is smaller than the prescribed threshold value. An SIR calculation section 17 obtains a ratio of the averaged value selected by the selection section 16 to the desired wave power detected by the desired wave power detection section 10.

## Description

### Technical Field

The present invention relates to a signal to interference ratio (SIR) measurement apparatus and an SIR measurement method in mobile communication of a code division multiple access (CDMA) system.

### Background Art

Conventionally, in mobile communication of the CDMA system, transmission power control is performed. In the transmission power control, a signal to interference power ratio (SIR) on a reception station side is calculated and transmission power on a transmission station side is controlled such that the value of the calculated SIR becomes constant.

As an SIR measurement apparatus, a method in which desired wave power and interference wave power are obtained by the use of a known pilot signal transmitted from a transmission side was examined as it was disclosed in, for example, Japanese Laid-Open Patent Publication No. HEI 10-13364. In the system, received desired wave power and received interference wave power are calculated in conformity with the following processes.

That is, as to the received desired wave power, the system estimates a transfer function by detecting a pilot signal from a base band received signal, and inverts the phase of the estimated transfer function. The system then multiplies a received signal by the inverted estimated transfer function to calculate a correlation vector. After the system performed the processing of the vector averaging of the calculated correlation vector, the system calculates the power of a correlation value by operating the square of the amplitude of the correlation vector. Consequently, the system works out the received desired wave power.

On the other hand, as to the received interference wave power, the system estimates a transfer function by detecting a pilot signal from a base band received signal, and inverts the phase of the estimated transfer function. The system then multiplies a received signal by the inverted estimated transfer function to calculate a correlation vector. The system stores a slot of the calculated correlation vectors, and performs the averaging processing of the calculated correlation vectors at every slot. Then, the system obtains a slot of error vectors by calculating a slot of vectors of the differences between the vector averaging values of the correlation vectors and a slot of correlation vectors. Furthermore, the system works out the received interference wave power by averaging a slot of squares of the amplitudes of the error vectors. And then, the system averages the calculated interference wave power over a plurality of slots.

However, because the averaging of the interference wave power is simply performed over a plurality of slots in the conventional SIR measurement apparatus, the conventional SIR measurement apparatus has the following problem.

That is, because enough averaging is not performed when the number of slots to be averaged is too small, the precision of the measurement of interference power deteriorates, and then the precision of the measurement of the SIR deteriorates . On the other hand, when the number of slots to be averaged is too large, the precise measurement of the interference power of suddenly generated interference becomes impossible, and then the precision of the measurement of the SIR deteriorates.

### Disclosure of Invention

An object of the present invention is to provide an SIR measurement apparatus and an SIR measurement method that are capable of measuring an SIR with a high precision even in an environment in which interference suddenly occurs.

The object is attained by the control of an averaging interval according to the variation quantity of interference wave power detected from a received signal, and by the calculations of an SIR by the use of interference wave power averaged over the averaging interval and desired wave power detected from the received signal.

### Brief Description of Drawings

FIG. 1 is a block diagram showing the configuration of an SIR measurement apparatus according to Embodiment 1 of the present invention;
FIG. 2 is a block diagram showing the configuration of the desired wave power detection section and the interference wave power detection section of the SIR measurement apparatus according to Embodiment 1 of the present invention;
FIG. 3 is a diagram for illustrating the operation of the SIR measurement apparatus according to Embodiment 1 of the present invention;
FIG. 4 is a block diagram showing the configuration of an SIR measurement apparatus according to Embodiment 2 of the present invention;
FIG. 5 is a block diagram showing the configuration of an SIR measurement apparatus according to Embodiment 3 of the present invention;
FIG. 6 is a block diagram showing the configuration of an SIR measurement apparatus according to Embodiment 4 of the present invention; and
FIG. 7 is a diagram showing the schematic configuration of a radio communication system according to Embodiment 5 of the present invention.

### Best Mode for Carrying Out the Invention

The best modes of the present invention are described in the following by reference to the attached drawings.

### (Embodiment 1)

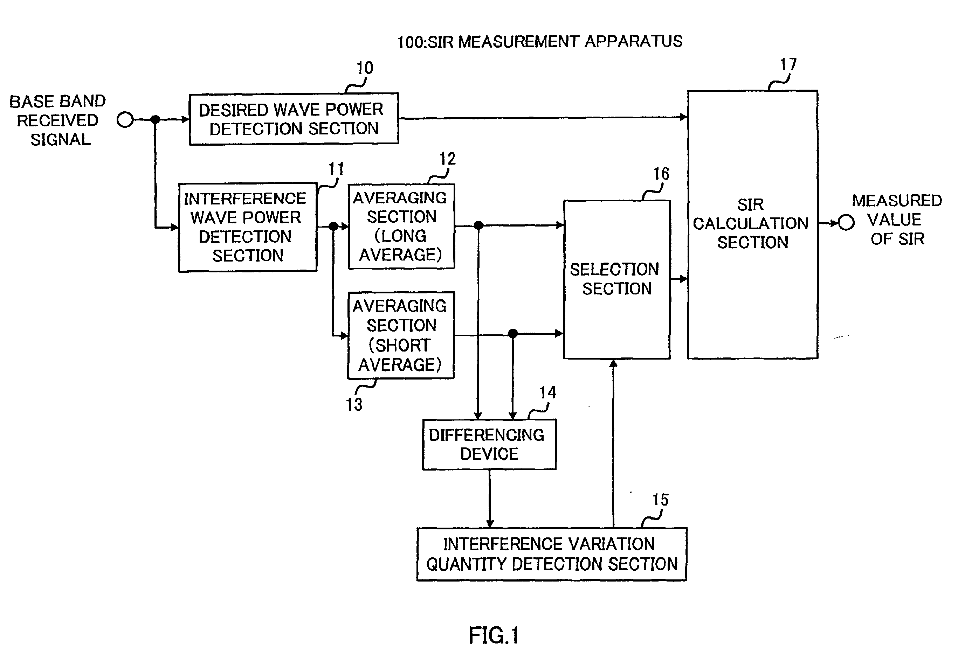

FIG. 1 is a block diagram showing the configuration of an SIR measurement apparatus according to Embodiment 1 of the present invention.

In the figure, the SIR measurement apparatus of the present embodiment is configured so as to comprise a desired wave power detection section 10, an interference wave power detection section 11, an averaging section 12, an averaging section 13, a differencing device 14, an interference variation quantity detection section 15, a selection section 16 and an SIR calculation section 17.

The desired wave power detection section 10 detects the power of a desired wave from a base band received signal at every prescribed processing unit ( for example, one slot) and outputs the detected power . The interference wave power detection section 11 detects the power of an interference wave from the base band received signal at every prescribed processing unit (for example, one slot) and outputs the detected power.

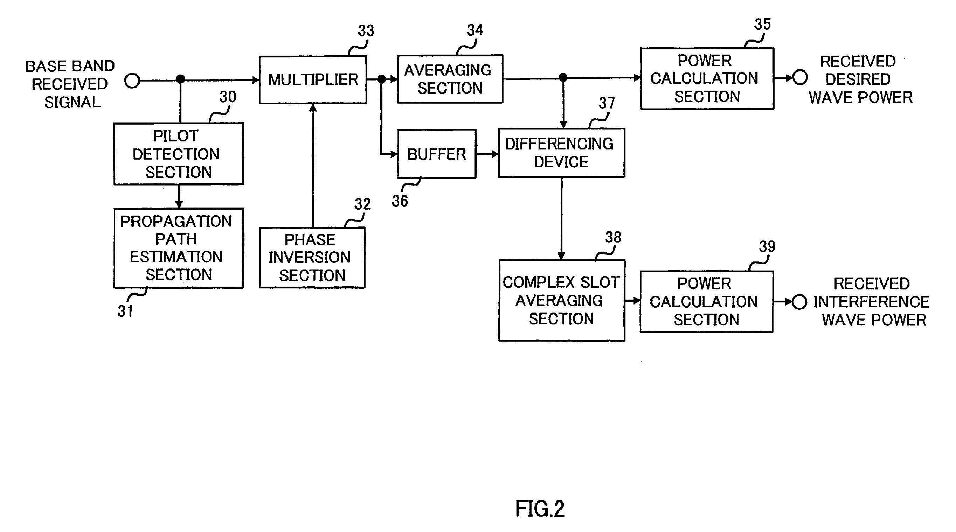

The desired wave power detection section 10 and the interference wave power detection section 11 are configured so as to comprise a pilot detection section 30, a propagation path estimation section 31, a phase inversion section 32, a multiplier 33, an averaging section 34, a power calculation section 35, a buffer 36, a differencing device 37, a complex slot averaging section 38 and a power calculation section 39 as shown in the block diagram of FIG. 2. Received desired wave power is outputted from the power calculation section 35, and received interference wave power is outputted from the power calculation section 39. Incidentally, the configurations of the desired wave power detection section 10 and the interference wave power detection section 11 are not limited to the configuration shown in FIG. 2, and the configurations are required only to be capable of detecting the power of a desired wave or an interference wave from a base band signal.

By reference to FIG. 1 again, the averaging section 12 calculates a long interval averaged value by averaging interference wave power detected by the interference wave power detection section 15 over a long interval. The averaging section 13 averages interference wave power detected by the interference wave power detection section 15 over a short interval to output a short interval averaged value. That is, the averaging section 12 and the averaging section 13 average the interference wave power detected by the processing unit at this time over a plurality of processing units, namely, by the use of the interference wave power detected by the processing units up to the previous time. In this case, the averaging section 13 performs its averaging processing over an interval shorter than that of the averaging section 12, namely, by the use of the interference wave power of the number of slots (the number of processing units ) less than that of the averaging section 12.

The differencing device 14 obtains the difference between the long interval averaged value and the short interval averaged value to output the obtained difference. The interference variation quantity detection section 15 controls the selection section 16 such that the selection section 16 outputs the short interval averaged value when the output of the differencing device 14 exceeds a predetermined threshold value and the selection section 16 outputs the long interval averaged value when the output does not exceed the predetermined threshold value. The SIR calculation section 17 obtains a ratio of the desired wave power detected by the desired wave power detection section 10 to the long interval averaged value or the short interval averaged value selected by the selection section 16, and outputs the result as an SIR measurement value. The SIR calculated in such a way is used by the processing at the subsequent stages such as transmission power control.

Next the operation of the SIR measurement apparatus according to Embodiment 1 is described. In the present embodiment, a case where interference wave power is calculated at every slot and the averaging of the interference wave power is also performed at every slot is described in the following.

At first, the desired wave power detection section 10 detects desired wave power from base band received signals for one slot, and the interference wave power detection section 11 detects interference wave power from the base band received signals for one slot. The interference wave power detected by the interference wave power detection section 11 is inputted into the averaging section 12 and the averaging section 13 severally. The interference wave power is averaged by the averaging section 12 over the long interval, and a long interval averaged value is worked out. Moreover, the interference wave power is averaged by the averaging section 13 over the short interval, and a short interval averaged value is worked out. The long interval averaged value outputted from the averaging section 12 and the short interval averaged value outputted from the averaging section 13 are inputted into the differencing device 14 for the calculation of the difference between these averaged values.

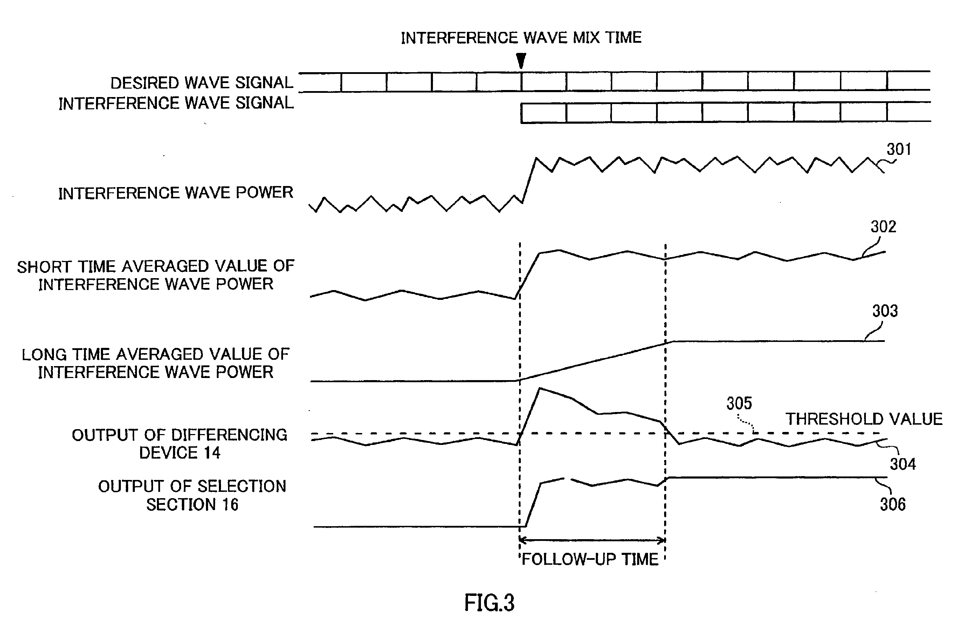

The interference variation quantity detection section 15 watches the outputs of the differencing device 14, and controls the selection section 16 such that the selection section 16 selects the short interval averaged value from the averaging section 13 when an output of the differencing device 14 exceeds the threshold value and the selection section 16 selects the long interval averaged value from the averaging section 12 when the output of the differencing device 14 does not exceed the threshold value. By the operation, as shown in FIG. 3, the short interval averaged value is selected when the variations of the interference wave power are large, and the long interval averaged value is selected when the variations of the interference wave power are small. The SIR calculation section 17 averages the desired wave power outputted from the desired wave power detection section 10, and outputs a ratio of the averaged desired wave power to the interference wave power outputted from the selection section 16 as a SIR measurement value.

Now, the calculation of the SIR is described in detail by reference to FIG. 3.

FIG. 3 shows time variations of the interference wave power in the case where an interference wave signal is suddenly mixed with a desired wave signal, which is being received, from a certain time (interference mix time). In the figure, interference wave power 301 is the interference wave power before receiving averaging. That is, the interference wave power 301 is an output signal of the interference wave power detection section 11. As shown in the figure, the interference wave power 301 rapidly varies at an interference wave mix time, namely varies in a width larger than the variation width in the case where no sudden increasing cause of an interference quantity such as the mixing of an interference wave exists .

A long interval averaged value 303 is an averaged value of the interference wave power 301 over the long interval. That is, the long interval averaged value 303 is an output signal of the averaging section 12. The long interval averaged value 303 is averaged over an interval that is enough for buffering the variations of the interference wave power 301 between slots in the case where no sudden increasing cause of the interference quantity such as the mixing of an interference wave exists, for example an interval of about 150 slots. Incidentally, 150 slots correspond to the number of slots included in 10 frames, and are about 100 ms.

The short interval averaged value 302 is an averaged value of the interference wave power 301 over the short interval. That is, the short interval averaged value 302 is an output signal of the averaging section 13. The short interval averaged value 302 is averaged over an interval shorter than that of the long interval averaged value 303, for example an interval for about 2 slots. Variations of the short interval averaged value 302 between the slots are gentler than those of the interference wave power 301 and more rapid than those of the long interval averaged value 303. That is, the short interval averaged value 302 is averaged in an interval enough for the buffering of the variations of the interference wave power 301 between slots in the case where no sudden increasing cause of the interference quantity such as the mixing of an interference wave exists. On the other hand, the short interval averaged value 302 is averaged in an interval that makes it possible to follow the variations of the interference wave power 301 between slots in the case where a cause of the sudden increase of the interference quantity such as the mixing of an interference wave exists.

A differencing device output 304 is a difference between the short interval averaged value 302 and the long interval averaged value 303. That is, the differencing device output 304 is an output signal of the differencing device 14. Because the long interval variation quantity 303 is averaged over an interval longer than that of the short interval variation quantity 302, the variations of the interference wave power 301 are reflected on the short interval averaged value 302 more than on the long interval averaged value 303. That is, the short interval averaged value 302 has a higher interlocking ability with the variations of the interference wave power 301 than the long interval averaged value 303. That is, the long interval averaged value 303 has a higher degree of dissociation from the interference wave power 301 than the short interval averaged value 302, and the degree of dissociation especially becomes large when the interference wave power 301 rapidly varies. As described above, when the interference wave power greatly varied, the difference between the long interval averaged value 303 and the short interval averaged value 302 becomes large because the difference of the interlocking ability is reflected.

By the acquisition of the difference between the short interval averaged value having a high interlocking ability to the interference wave power 301 and the long interval averaged value having low interlocking ability in such a way, the rapid variations of the interference wave power 301 can be detected.

A threshold value 305 is a threshold value set in the interference variation quantity detection section 15. The interference variation quantity detection section 15 judges a variation quantity to be large when an output value of the differencing device 14, i.e. the differencing device output 304, exceeds the threshold value 305, and the interference variation quantity detection section 15 controls the selection section 16 to output the short interval averaged value. On the other hand, the interference variation quantity detection section 15 controls the selection section 16 to output the long interval averaged value when the differencing device output 304 does not exceed the threshold value 305.

Hereupon, the control by the interference variation quantity detection section 15 is described. During a prescribed time from the interference wave mix time, which is shown by dotted vertical lines, the differencing device output 304 exceeds the threshold value 305. That is, the long interval averaged value 303 overtakes the interference wave power 301 at a time when a period of time enclosed with the dotted lines shown in FIG. 3 has passed from the interference mix time. The time region enclosed by the dotted lines shown in FIG. 3, namely the time required for the long interval averaged value 303 to overtake the interference wave power 301, is called as a follow-up time in the present specification.

When the interference wave power 301 and the long interval averaged value 303 are compared in the follow-up time, the interference wave power 301 shows a rapid variation immediately at the interference wave mix time, but the long interval averaged value has reached the power at the same degree as the interference wave power 301 after the passage of the follow-up time. Moreover, when the interference wave power 301 and the short interval averaged value 302 are compared in the follow-up time, the short interval averaged value 302 immediately reaches the power at the same degree as the interference wave power 301. That is, the short interval averaged value 302 can immediately follow sudden variations of the interference wave power 301 at the interference wave mix time. As described above, the short interval averaged value 302 has a higher following ability to the sudden variations of the interference wave power 301 owing to the mix of a interference wave and the like than the long interval averaged value 303.

A selection section output 306 corresponds to an output signal of the selection section 16. In FIG. 3, the short interval averaged value is selected in the follow-up interval where the variations of the interference wave power are large, and the long interval averaged value is selected at an interval other than the follow-up interval.

The fact is described that the average of the power of an interference wave signal (interference wave power) needs calculating over a long interval before the mixing of the interference wave signal (before the interference wave mix time) in the case where the interference wave power shows the variations as described above.

Because the interference wave power 301 is a value of the measurement of the power of an interference wave signal every slot, the interference wave power varies by the slot, and consequently it is impossible to obtain an SIR having a high precision when the SIR is calculated by the use of the interference wave power 301. That is, an erroneous detection value caused by measurement errors of the interference wave power is reflected on the SIR as it is. Moreover, by reference to the short interval averaged value 302 of the interference wave power, the interference wave power has dispersion yet even if the averaging of it is performed over a short interval. Accordingly, the averaging of the interference wave power over a long interval is performed. By reference to the long interval averaged value 303 of the interference wave power, the variation quantity of the interference wave power between slots becomes small, and then it becomes possible to perform the SIR measurement having a high precision. As described above, the dispersion of the interference wave power cannot be suppressed until the long interval averaging of the interference wave power is performed, namely the variation quantity of the interference wave power between slots becomes small and the SIR measurement having a high precision becomes possible.

Next, it is described that the long interval averaging is not sufficient immediately after the interference wave has mixed.

By reference to FIG. 3, the following of the long interval averaged value 303 to a sudden interference is slow, and its degree of dissociation (difference) from an actual value becomes large immediately after the interference wave mix time. That is, the actual interference wave power 301 rapidly becomes large immediately after the interference wave mix time. On the contrary, the long interval averaged value 303 stays at low power level before the interference wave mix because the long interval averaged value 303 is averaged with an interference wave power value being a lower power level in a slot before the interference wave mix. Consequently the gap between the actual value (interference wave power 301) and the long interval averaged value 303 is large. As described above, an SIR having a good precision cannot be obtained only by the averaging of a long interval immediately after the interference wave mix.

Accordingly, by the calculation of an SIR using the short interval averaged value 302 in the case where the variation of the interference wave power rapidly becomes large like a case where an interference wave is newly mixed for example, and by the calculation of the SIR using the long interval averaged value 303 in the other cases, the rapid variation of interference can be coped with, and an SIR measurement having a good precision becomes possible.

As described above, according to the present embodiment, the averaging section 12 and the averaging section 13 respectively calculates an averaged value of interference wave power over a long interval and an averaged value of the interference wave power over a short interval, and the differencing device 14 obtains the difference between these averaged values, and thereby the variation quantity of the interference wave power is detected. Then, by the control of the interference variation quantity detection section 15, the SIR calculation section 17 calculates an SIR by the use of an averaged value over a long interval outputted from the selection section 16 when the difference between the long interval averaged value and the short interval averaged value that indicate the variation quantity of the interference wave power is larger than a prescribed threshold value, and, on the contrary, the SIR calculation section 17 calculates an SIR by the use of an averaged value over a short interval outputted from the selection section 16 when the difference is smaller than the prescribed threshold value. Consequently, the SIR calculation section 17 calculates the SIR by changing the averaging interval (the number of slots) that is used for the calculation of the averaged value according to the largeness of the variation quantity of the interference wave power.

Consequently, it is possible to follow the SIR to the rapid variations of the interference wave power by the performance of the averaging of the interference wave power for a short interval in the case where the interference wave power rapidly varies owing to the sudden generation of an interference or the like. On the other hand, an abnormal value of interference wave power generated by erroneous detection or the like is compensated and it becomes possible to perform an SIR measurement in a good precision by the performance of averaging of the interference wave power for a long interval in a stable environment in which the interference wave power is substantially constant.

Incidentally, although descriptions are given in the present embodiment to a case where the interference wave power is calculated every slot and similarly the averaging of the interference wave power is performed every slot. However the present invention is not limited to such a case, but the calculation and the averaging of the interference wave power are performed every prescribed processing unit.

Furthermore, although the averaging is performed in the present embodiment in different averaging intervals by the averaging section 12 and the averaging section 13 severally, the present invention is not limited to such a case, and the averaging may be performed with a plurality of averaging sections having averaging intervals different from each other. The differencing device 14 obtains the difference of outputs of those plural averaging sections, and the interference variation quantity detection section 15 detects the variation quantity of the interference wave power from the difference to select one of the outputs of the plural averaging sections according to the detected variation quantity. The SIR calculation section 17 calculates an SIR by the use of the output of the selected averaging section and an output of the desired wave power detection section 10.

Furthermore, although the variation quantity of the interference wave power is detected by the acquisition of difference between the long interval averaged value calculated by the averaging section 12 and the short interval averaged value calculated by the averaging section 13 in the present embodiment, the interference wave power may be detected by obtaining the ratio of the long interval averaged value to the short interval averaged value.

### (Embodiment 2)

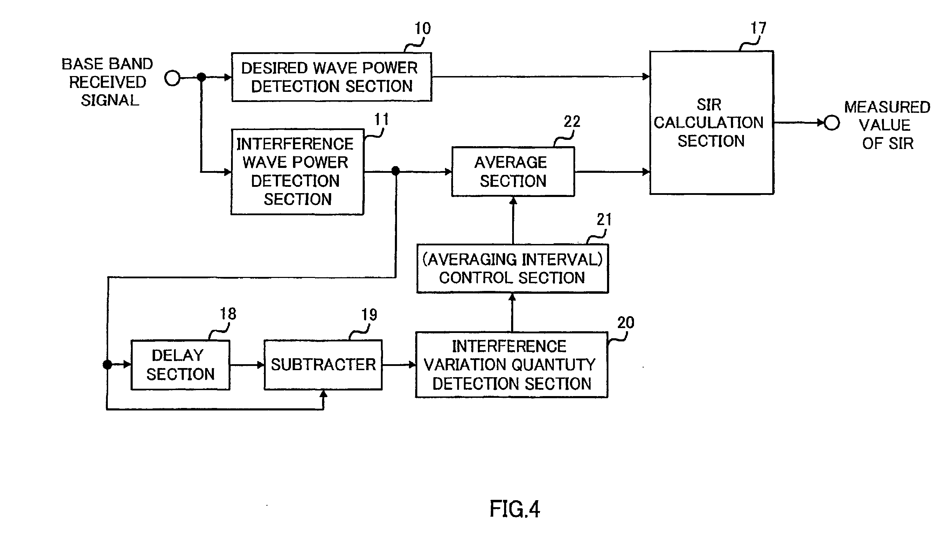

FIG. 4 is a block diagram showing the configuration of an SIR measurement apparatus according to Embodiment 2 of the present invention. Incidentally, in the figure, sections common to those in FIG. 1 of the aforesaid Embodiment 1 are designated by the same reference marks as those of FIG. 1. The present embodiment differs from Embodiment 1 in the point that the variations of interference wave power are detected by the acquisition of difference of interference waver power before and after in time.

In the figure, the SIR measurement apparatus of Embodiment 2 is configured so as to comprise an averaging section 22 that can change its averaging interval and averages an output of the interference wave power detection section 11, a delay section 18 for delaying the output of the interference wave power detection section 11, a subtracter 19 for subtracting two pieces of interference wave power that became before one and after one in time by the delaying of the delay section 18 to obtain a difference between the two pieces of the interference wave power, an interference variation quantity detection section 20 for detecting the variation quantity of the interference wave power from an output of the subtracter 19, and an averaging length control section 21 for controlling the averaging interval in the averaging section 22 according to the variation quantity of the interference wave power detected by the interference variation quantity detection section 20 besides the desired wave power detection section 10, the interference wave power detection section 11, and the SIR calculation section 17.

The SIR measurement apparatus of Embodiment 2 detects the largeness of the variation quantity of interference wave power from the difference of averaged interference wave power before and after in time, and the apparatus changes its averaging interval at the time of averaging the interference wave power according to the largeness of the variation quantity of the interference wave power. That is, the apparatus makes the averaging length short when the variation quantity of the interference wave power is large, and the apparatus makes the averaging length long when the variation quantity of the interference wave power is small.

Consequently, Embodiment 2 can also perform an SIR measurement in a good precision even in an environment where interference is suddenly generated.

Incidentally, although the present embodiment detects the variation quantity of interference wave power by obtaining the difference of interference wave power before and after in time, the land surveying of the variation quantity of the interference wave power can be performed by the acquisition of a ratio of interference wave power before and after in time.

### (Embodiment 3)

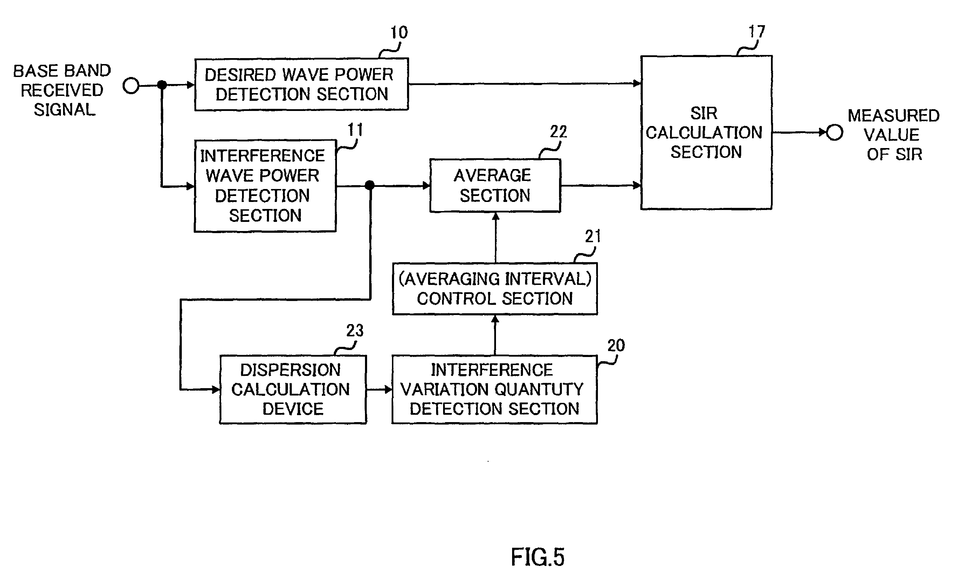

FIG. 5 is a block diagram showing the configuration of a SIR measurement apparatus according to Embodiment 3 of the present invention. Incidentally, in the figure, sections common to those in FIG. 1 according to the aforesaid Embodiment 1 are designated by the same reference marks as those of FIG. 1, and their descriptions are omitted. The present embodiment differs from Embodiment 1 in a point that heat and cool detect the variation quantity of interference wave power by calculating power dispersion.

The SIR measurement apparatus of Embodiment 3 comprises a dispersion calculation device 23 for obtaining dispersion from an output of the interference power detection section 11 and an interference variation quantity detection section 24 for detecting the largeness of the variation quantity of interference wave power from a dispersion value calculated by the dispersion calculation device 23 in place of the delay section 18, the subtracter 19, and the interference variation quantity detection section 20 of the aforesaid SIR measurement apparatus according to Embodiment 2.

The averaging interval control section 21 changes the averaging interval in the averaging section 22 according to the largeness of the variation quantity of the interference waver power detected by the interference variation quantity detection section 24. That is, the averaging interval control section 21 makes the averaging length short when the interference variation quantity is large, and makes the averaging length long when the interference variation quantity is small.

As described above, Embodiment 3 can also perform an SIR measurement in a good precision even in an environment in which interference is suddenly generated.

### (Embodiment 4)

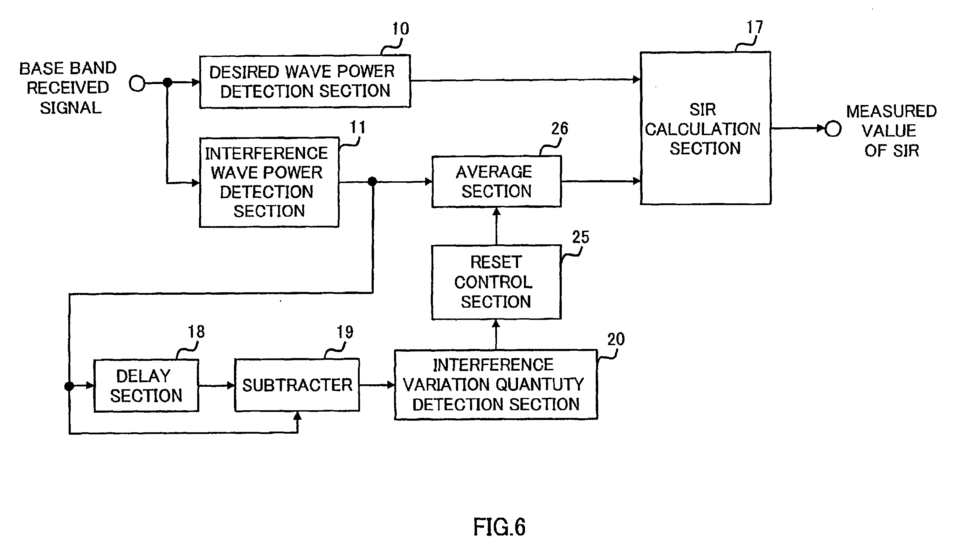

FIG. 6 is a block diagram showing the configuration of an SIR measurement apparatus according to Embodiment 4 of the present invention. Incidentally, in the figure, sections common to those of the aforementioned FIG. 1 according to Embodiment 1 are designated by the same reference marks as those of FIG. 1, and their descriptions are omitted.

The SIR measurement apparatus of Embodiment 4 comprises a reset signal control section 25 for controlling the outputting of a reset signal according to the largeness of the variation quantity of the interference wave power detected by the interference variation quantity detection section 20 and an averaging section 26 that takes its reset state when an reset signal is inputted in place of the averaging interval control section 21 and the averaging section 22 of the aforesaid SIR measurement apparatus of Embodiment 2. The reset signal control section 25 outputs a reset signal when the largeness of the variation quantity of the interference wave power detected by the interference variation quantity detection section 20 exceeds a prescribed threshold value.

The averaging section 26 averages the interference wave power in a plurality of processing units including the processing unit at this time. That is, the averaging section 26 holds the interference wave power detected by processing units up to the previous time in a not shown memory, and averages the interference wave power detected by the processing unit at this time by the use of the interference wave power up to the previous time that was read out from the memory. That is, the averaging section 26 performs the averaging over the processing units held in the aforesaid memory. On the other hand, the averaging section 26 abandons the interference wave power held in the memory when a reset signal is inputted. Consequently, after the reset signal was inputted, the averaging section 26 performs averaging for an interval shorter than that before the reset signal was inputted, and thereby the averaging section 26 can follow rapid variations of the interference wave power.

As described above, Embodiment 4 can also perform an SIR measurement in a good precision even in an environment in which interference is suddenly generated.

### (Embodiment 5)

The SIR calculation apparatuses and the SIR calculation methods that are described in each of the aforesaid embodiments manifest their especially conspicuous effects in transmission power control using an SIR calculated by the use of such apparatuses and methods . In the present embodiment, a description is given to a radio communication system for performing the transmission power control using an SIR calculated by the use of the SIR calculation apparatuses and the SIR calculation methods described with regard to each of the aforesaid embodiments .

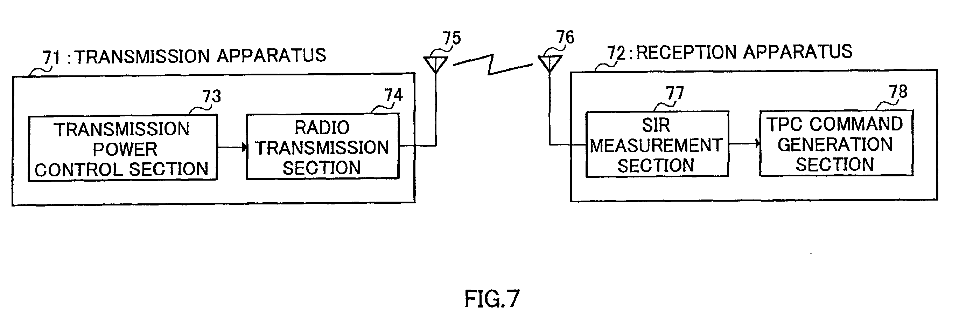

FIG. 7 is a diagram showing the schematic configuration of a radio communication system according to Embodiment 5 of the present invention. The radio communication system shown in FIG. 7 is configured so as to include a transmission apparatus 71 and a reception apparatus 72. The reception apparatus 72 receives a signal transmitted from the transmission apparatus 71 through an antenna 71, and inputs the received signal into an SIR measurement section 77. The SIR measurement section 77 has, for example, the SIR measurement apparatus 100 shown in Embodiment 1, and calculates an SIR from the received signal to output the calculated SIR to a TPC command generation section 78. The TPC command generation section 78 compares an SIR outputted from the SIR measurement section 77 with a predetermined target SIR, and generates a TPC command instructing the increase of transmission power when the target SIR is larger, and, on the other hand, generates a TPC command instructing the decrease of the transmission power when the target SIR is smaller. The TPC command generated in such a way is transmitted to the transmission apparatus 71. The TPC command is generated every slot in the reception apparatus 72.

The transmission apparatus 71 acquires the TPC command transmitted from the reception apparatus 72 to input the acquired TPC command into a transmission power control section 73. The transmission power control section 73 controls the increase and the decrease of transmission power in a radio transmission section 74 in conformity with the TPC command. The radio transmission section 74 transmits a signal the transmission power of which is increased or decreased by the control of the transmission power control section 73 to the reception apparatus 71 from an antenna 75.

The operation of the radio communication system having the aforesaid configuration is described. At first, a signal transmitted from the transmission apparatus 71 by radio is received by the reception apparatus 72 through the antenna 76. The SIR measurement section 77 calculates an SIR on the basis of a short interval averaged value in the case where the difference between a long interval averaged value of interference wave power and the short interval averaged value of the interference wave power exceeds a predetermined threshold value, and the SIR measurement section 77 calculates an SIR on the basis of the long interval averaged value in the case where the difference does not exceed the predetermined threshold value. Because the SIR is used for transmission power control that is performed by the slot in the radio communication system in the present embodiment, the SIR to be calculated needs to follow the changes of the interference wave power by the slot. Consequently, the threshold value to be set in the SIR measurement apparatus 100 is set in order that the calculated SIR can follow the changes of the interference wave power by the slot.

The calculated SIR is compared with the target SIR in the TPC command generation section 78, and a TPC command according to the comparison result is generated. The generated TPC command is transmitted to the transmission apparatus 71, and is inputted into the transmission power control section 73. The transmission power control section 73 controls the increase and the decrease of transmission power in conformity with the TPC command. The radio transmission section 74 increases or decreases the transmission power in conformity with the control of the transmission power control section 73.

As described above, according to the present embodiment, even in the case where interference wave power rapidly changed in transmission power control, an SIR can be calculated in a good precision by the following of the rapid changes. Consequently, transmission power control can be performed in a good precision.

Incidentally, although descriptions are given to a case where the SIR measurement section 77 has the SIR measurement apparatus shown in Embodiment 1 in the present embodiment, the present invention is not limited to such a case, and the SIR measurement section 77 may have any SIR measurement apparatus described with respect to each of the aforesaid embodiments. That is, in the case where the SIR measurement section 77 has the SIR measurement apparatus according to Embodiment 2 or Embodiment 3, the SIR measurement section 77 calculates interference wave power that is averaged by making its averaging length short when an interference variation quantity is large and by making the averaging length long when the interference variation quantity is small. Moreover, in the case where the SIR measurement section 77 has the SIR measurement apparatus according to Embodiment 4, the SIR measurement section 77 outputs a reset signal when the largeness of the variation quantity of interference wave power exceeds a prescribed threshold value.

The radio communication system according to the present embodiment is applied to a cellular system. A base station installs the transmission apparatus 71, and a movable body that freely moves in the cell of the base station installs the reception apparatus 72. Then, the aforesaid transmission power control is performed between the base station and the mobile station.

The present invention is not limited to each of the aforesaid embodiments, but the invention can use appropriate modifications of each of the aforesaid embodiments. For example, the reset control section 25 described with regard to Embodiment 4 can be applied to the SIR measurement apparatus described with respect to any of Embodiment 1 to Embodiment 3.

As described above, the present invention can perform an SIR measurement in a good precision even in an environment in which interference is suddenly generated.

This application is based on the Japanese Patent Application No. 2000-006764 filed on January 14, 2000, entire content of which is expressly incorporated by reference herein.

### Industrial Applicability

The present invention is suitable for being applied to a field of a signal to interference ratio (SIR) measurement apparatus and a SIR measurement method in mobile communication of a code division multiple access (CDMA) system.

## Claims

1. An SIR measurement apparatus comprising:
desired wave power detection means for detecting desired wave power from a received signal;
interference wave power detection means for detecting interference wave power from the received signal;
averaging means for averaging an output of said interference wave power detection means over a plurality of processing units;
control means for detecting a variation quantity of the interference wave power from the output of said interference wave power detection means to control averaging intervals in said averaging means according to the detected variation quantity; and
SIR calculation means for obtaining a ratio of an output of said desired wave power detection means to an output of said averaging means.

2. The SIR measurement apparatus according to claim 1, wherein:
said averaging means averages the output of said interference wave power detection means for averaging intervals different from each other, and
said control means obtains a difference between each output of said averaging means to select one of each output of said plural averaging means.

3. The SIR measurement apparatus according to claim 1, wherein:
said averaging means comprises a first averaging means for performing averaging processing over a prescribed interval, and a second averaging means for performing averaging processing over an interval shorter than the prescribed interval of said first averaging means, and
said control means obtains a difference between an output of said first averaging means and an output of said second averaging means to select either of the output of said first averaging means and the output of said second averaging means according to the obtained difference.

4. The SIR measurement apparatus according to claim 1, further comprising delay means for delaying the output of said interference wave power detection means,
wherein said control means obtains a difference between the output of said interference wave power detection means and an output of said delay means to control the averaging intervals in said averaging means according to the obtained difference.

5. The SIR measurement apparatus according to claim 1, further comprising dispersion calculation means for obtaining dispersion of an output value of said interference wave power detection means,
wherein said control means controls the averaging intervals in said averaging means according to an output of said dispersion calculation means.

6. The SIR measurement apparatus according to claim 1, further comprising reset signal control means for outputting a reset signal to reset said averaging means according to largeness of a variation quantity of interference wave power detected by interference variation quantity detection means.

7. A mobile station apparatus equipped with an SIR measurement apparatus, said SIR measurement apparatus comprising:
desired wave power detection means for detecting desired wave power from a received signal;
interference wave power detection means for detecting interference wave power from the received signal;
averaging means for averaging an output of said interference wave power detection means over a plurality of processing units;
control means for detecting a variation quantity of the interference wave power from the output of said interference wave power detection means to control averaging intervals in said averaging means according to the detected variation quantity; and
SIR calculation means for obtaining a ratio of an output of said desired wave power detection means to an output of said averaging means.

8. A base station apparatus equipped with an SIR measurement apparatus, said SIR measurement apparatus comprising:
desired wave power detection means for detecting desired wave power from a received signal;
interference wave power detection means for detecting interference wave power from the received signal;
averaging means for averaging an output of said interference wave power detection means over a plurality of processing units;
control means for detecting a variation quantity of the interference wave power from the output of said interference wave power detection means to control averaging intervals in said averaging means according to the detected variation quantity; and
SIR calculation means for obtaining a ratio of an output of said desired wave power detection means to an output of said averaging means.

9. An SIR measurement method comprising:
a desired wave power detection step for detecting desired wave power from a received signal;
an interference wave power detection step for detecting interference wave power from the received signal;
averaging steps for averaging an output at said interference wave power detection step over a plurality of processing units;
a control step for detecting a variation quantity of the interference wave power from the output at said interference wave power detection step to control averaging intervals at said averaging steps according to the detected variation quantity; and
a step for obtaining a ratio of an output at said desired wave power detection step to an output at said averaging steps.
